# FASCICULE DE BREVET EUROPEEN

(11) **EP 2 540 539 B1**
(45) Date de publication et mention de la délivrance du brevet: **29.10.2014**
(21) Numéro de dépôt: 12172653.3
(22) Date de dépôt: 19.06.2012
(51) Int. Cl.: B60H 1/00, F16H 53/06

(54) **Dispositif à came, notamment pour un appareil de chauffage, ventilation et/ou climatisation de véhicules automobiles**
Nockenvorrichtung, insbesondere für eine Heiz-, Belüftungs- und/oder Klimatisierunganlage für Kraftfahrzeuge
Cam device, especially for a heating, ventilation and/or air-conditioning system for motor vehicles

(30) Priorité: 27.06.2011 ES 201131075
(43) Date de publication de la demande: 02.01.2013
(73) Titulaire: Valeo Climatización, 08107 Martorelles (ES)
(72) Inventeur: Rovira Comalat, Ulderic, 08107 MARTORELLES (ES)
(74) Mandataire: Vieillevigne, Sébastien Nicolas Bernard

(56) Documents cités:
- FR-A1- 2 335 753
- FR-A1- 2 643 315
- US-A1- 2002 195 227

## Description

La présente invention concerne un dispositif à came, notamment pour un appareil de chauffage, ventilation et/ou climatisation de véhicules automobiles, tel que divulgué dans le FR 2 643 315 A1.

Les appareils de chauffage, ventilation et/ou climatisation (HVAC) de véhicules automobiles font couramment appel à des cames pour déplacer un ou plusieurs leviers de manière synchronisée et/ou pour suivre une loi de mouvement particulière.

Ce type de cames sert généralement à actionner des leviers qui déplacent à leur tour des clapets d'entrée et de sortie d'air. Ce type de cames peut toutefois également servir à actionner d'autres dispositifs.

Ces cames sont accouplées à un axe de rotation apte à effectuer un mouvement rotatif de va-et-vient correspondant au mouvement alternatif d'ouverture et de fermeture des clapets d'entrée et de sortie d'air. L'axe de rotation de la came peut être actionné au moyen d'un moteur électrique, ou bien manuellement par la transmission d'un câble.

Lesdites cames comportent un chemin de came périmétrique défini entre une paroi extérieure et une paroi intérieure, avec deux extrémités distales plus éloignées par rapport à l'axe de rotation que le reste des points périmétriques.

Il est généralement fait appel à un ou deux leviers rotatifs entraînés par le mouvement de la came, comportant un bras dont l'extrémité est pourvue d'un suiveur de came susceptible de glisser dans le chemin de came.

Lors du processus de montage, l'opérateur doit monter les suiveurs de came dans le chemin de came pour assurer un bon fonctionnement. À défaut, le système de came ne fonctionnera pas correctement et risquera notamment de se bloquer.

Au cours du montage, si l'accès ou la visibilité du levier sont insuffisants, les suiveurs de came peuvent aisément se positionner en dehors du chemin de came. C'est souvent le cas lorsque le montage s'effectue à l'intérieur du véhicule, où l'accès et la visibilité sont limités, ou lorsque la came masque les suiveurs de came. Dans ces cas-là, l'opérateur travaille sans visibilité totale en s'aidant du toucher et de son expérience pour introduire correctement le suiveur de came. Ce procédé de montage est par conséquent complexe et peu fiable.

Le dispositif à came, notamment pour un appareil de chauffage, ventilation et/ou climatisation de véhicules automobiles, selon la présente invention a pour objet de remédier aux inconvénients des dispositifs à came connus dans la technique. L'invention propose un dispositif à came plus efficace, permettant le montage automatique des suiveurs de came dans le chemin de came.

Le dispositif à came, notamment pour un appareil de chauffage, ventilation et/ou climatisation de véhicules automobiles, objet de la présente invention, est du type comprenant une came pourvue d'un axe de rotation apte à effectuer un mouvement rotatif de va-et-vient, ladite came comportant un chemin de came périmétrique défini entre une paroi extérieure et une paroi intérieure, au moins un levier rotatif entraîné par le mouvement de la came dont l'extrémité comporte un suiveur de came susceptible de glisser dans le chemin de came, ledit suiveur de came étant placé hors du chemin de came préalablement à son montage, et **caractérisé en ce qu'**il comprend au moins un élément déformable apte à fléchir lorsque le suiveur de came, situé hors du chemin de came préalablement à son montage, est poussé par un segment en position extrême du chemin de came au cours de la rotation de la came, alors que la rotation libre du levier est bloquée par une butée fixe, et en ce que le chemin de came comporte dans ledit segment en position extrême une ouverture conçue pour recevoir et engager le suiveur de came dans le chemin de came de manière automatique grâce à la force de rappel de l'élément déformable.

Le suiveur de came de chaque levier est ainsi susceptible de se mettre en place automatiquement, sans l'intervention de l'opérateur, dans le chemin de came au cours du mouvement rotatif de va-et-vient de la came.

De préférence, l'élément déformable est un bras flexible appartenant au levier.

Dans ce cas, lorsque le suiveur de came parvient à l'ouverture dans le segment en position extrême, le bras est maintenu en position fléchie, et ledit suiveur tend à pénétrer à l'intérieur de l'ouverture grâce à la force de rappel du bras flexible, en se mettant automatiquement en place dans le chemin de came, sans pouvoir en ressortir puisqu'il reste au contact de la paroi du chemin de came opposée à ladite ouverture, en garantissant ainsi le bon fonctionnement du dispositif à came.

Facultativement, l'élément déformable est un segment de paroi flexible appartenant à une paroi du chemin de came, occupant une position adjacente à l'ouverture.

De cette manière, le segment de paroi flexible adjacent à l'ouverture est apte à fléchir par la poussée du suiveur de came, lorsque ledit suiveur atteint le segment en position extrême de la came et le levier est bloqué par la butée. Lorsque le suiveur de came s'est engagé dans le chemin de came par l'ouverture, le segment de paroi fléchi reprend sa forme initiale et le suiveur de came reste introduit dans le chemin de came.

Cette solution à paroi extérieure flexible peut être utilisée seule avec un bras de levier sensiblement rigide, ou combinée au levier à bras flexible. Dans ce dernier cas, le bras flexible peut être plus robuste du fait qu'il nécessite une moindre déformation, le couple requis pour faire tourner la came s'en trouvant par ailleurs réduit.

Selon un mode de réalisation de l'invention, le dispositif comporte deux segments en position extrême respectivement situés à chacune des extrémités distales par rapport à l'axe de rotation de la came, deux leviers placés dans la partie extérieure par rapport au chemin de came, et deux ouvertures pratiquées dans la paroi extérieure du chemin de came de chaque extrémité distale et associées chacune à un levier.

Cette configuration préférée à deux leviers peut être utilisée pour déplacer respectivement des clapets d'entrée et de sortie d'air, puisque ce type de leviers est généralement accouplé dans une carcasse d'entrée d'air d'un appareil HVAC.

Dans ce cas, le bras poussé par l'extrémité distale correspondante fléchit vers l'extérieur pour atteindre une position limitée par la butée, et le suiveur de came atteignant l'ouverture dans la paroi extérieure s'introduit à son tour automatiquement dans le chemin de came.

Selon un autre mode de réalisation de l'invention, le dispositif comporte au moins un segment en position extrême situé à une extrémité proximale par rapport à l'axe de rotation de la came, au moins un levier placé dans la partie intérieure par rapport au chemin de came, et au moins une ouverture pratiquée dans la paroi intérieure du chemin de came de l'extrémité proximale et associée au levier.

Dans cet autre cas, le bras poussé par l'extrémité proximale correspondante fléchit vers l'intérieur pour atteindre une position limitée par la butée, et le suiveur de came atteignant l'ouverture dans la paroi intérieure s'introduit à son tour automatiquement dans le chemin de came.

Avantageusement, le levier comporte un élément de support destiné à limiter la position du suiveur de came dans la position de repos du bras flexible.

De préférence, l'ouverture constitue une interruption de la paroi du segment en position extrême du chemin de came.

Avantageusement, la came présente une configuration sensiblement ovale, l'axe de rotation occupant une position sensiblement centrale.

De préférence, la butée dudit au moins un levier est solidaire d'une carcasse sur laquelle tournent la came et ledit au moins un levier.

Selon un autre aspect, l'invention concerne également un procédé de montage d'au moins un suiveur de came dans le chemin de came du dispositif à came décrit précédemment, **caractérisé en ce** que le suiveur de came est placé hors du chemin de came préalablement à son montage, ledit au moins un élément déformable fléchit lorsque le suiveur de came est poussé par un segment en position extrême du chemin de came au cours de la rotation de la came, alors que la rotation libre du levier est bloquée par une butée fixe, ledit suiveur de came pénétrant de manière automatique dans une ouverture du chemin de came située dans ledit segment en position extrême grâce à la force de rappel de l'élément déformable.

Facultativement, suite au montage d'un premier suiveur de came, la came est actionnée en sens inverse de rotation pour monter un deuxième suiveur de came placé hors du chemin de came et dans une position sensiblement opposée au premier suiveur de came.

Dans le but de faciliter la description de ce qui a été exposé précédemment, on joint des dessins dans lesquels sont représentés, sous forme schématique et uniquement à titre d'exemple non limitatif, trois cas pratiques de réalisation du dispositif à came, notamment pour un appareil de chauffage, ventilation et/ou climatisation de véhicules automobiles, de l'invention. Dans ces dessins :
- la figure 1 est une vue schématique du dispositif à came de l'invention, illustrant les deux leviers engagés dans le chemin de came ;
- la figure 2 est une vue schématique d'un levier ;
- la figure 3 est une vue schématique du dispositif à came selon un premier mode de réalisation, où les leviers sont placés hors du périmètre de la came, illustrant un levier avec le suiveur de came situé à proximité de la paroi extérieure du chemin de came préalablement à son montage ;
- la figure 4 est une vue schématique selon la figure 3, illustrant le levier bloqué par la butée après avoir atteint la position de l'extrémité distale de la came, et avec le suiveur placé près de l'ouverture du chemin de came ;
- la figure 5 est une vue schématique selon la figure 4, illustrant le levier bloqué et le bras flexible poussé par l'extrémité distale, et avec le suiveur de came sur le point de pénétrer dans l'ouverture du chemin de came ;
- la figure 6 est une vue schématique selon la figure 5, illustrant le suiveur de came introduit dans l'ouverture dans le chemin de came ;
- la figure 7 est une vue schématique du dispositif à came selon un deuxième mode de réalisation, illustrant un segment flexible de la paroi extérieure du chemin de came à l'état fléchi ;
- la figure 8 est une vue schématique selon la figure 7, illustrant le suiveur de came dans le chemin de came avec la came tournant en sens contraire en fonctionnement normal ;
- la figure 9 est une vue schématique du dispositif à came selon un troisième mode de réalisation, où le levier illustré est placé dans le périmètre de la came, illustrant le levier avec le suiveur de came situé à proximité de la paroi intérieure du chemin de came préalablement à son montage ;
- la figure 10 est une vue schématique selon la figure 9, illustrant le levier bloqué par la butée après avoir atteint la position de l'extrémité proximale de la came, et avec le suiveur placé près de l'ouverture du chemin de came ;
- la figure 11 est une vue schématique selon la figure 10, illustrant le levier bloqué et le bras fléchi poussé par l'extrémité proximale, et avec le suiveur de came sur le point de pénétrer dans l'ouverture du chemin de came ; et
- la figure 12 est une vue schématique selon la figure 11, illustrant le suiveur de came introduit dans l'ouverture dans le chemin de came.

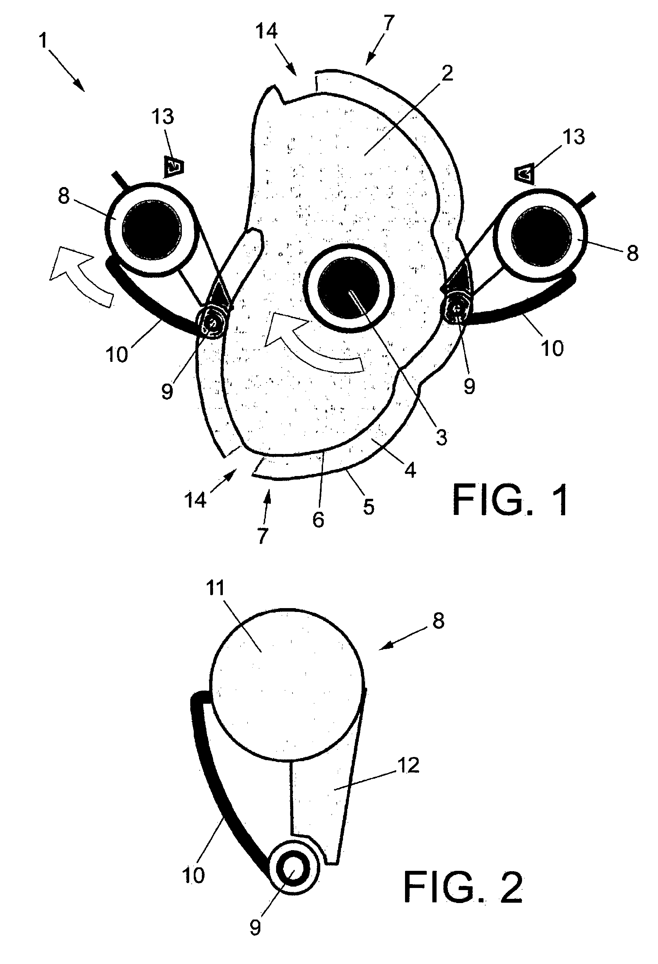

Selon un premier mode de réalisation de l'invention illustré aux figures 1 à 6, le dispositif à came 1, notamment pour un appareil de chauffage, ventilation et/ou climatisation de véhicules automobiles, selon l'invention comprend une came 2 pourvue d'un axe de rotation 3 apte à effectuer un mouvement rotatif de va-et-vient, ladite came 2 comprenant un chemin de came 4 périmétrique défini entre une paroi extérieure 5 et une paroi intérieure 6. La came 2 comporte deux segments en position extrême 7 respectivement situés à chacune des extrémités distales par rapport à l'axe de rotation 3 de la came 2.

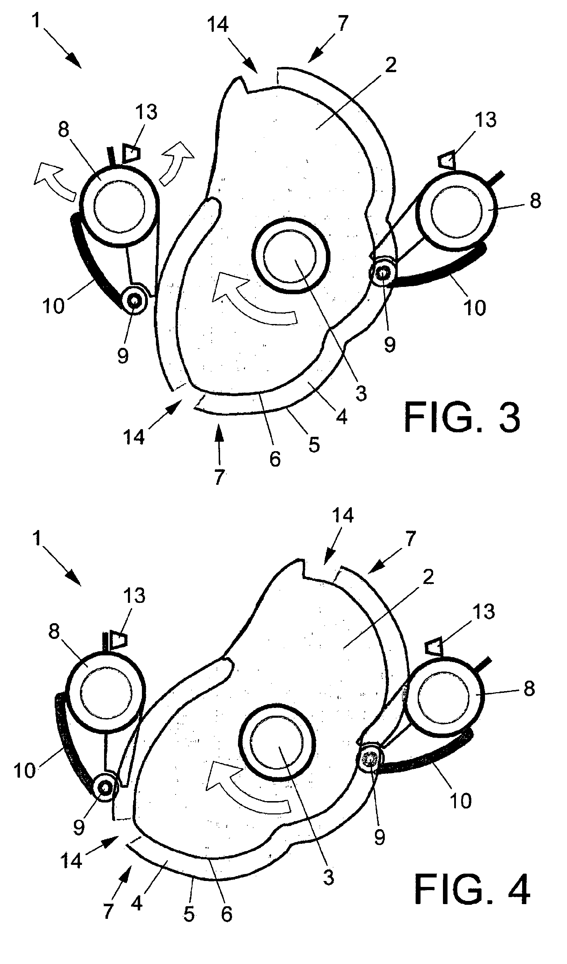

Le dispositif 1 comprend également deux leviers 8 placés dans la partie extérieure par rapport au chemin de came 4. Lesdits leviers rotatifs 8 sont entraînés par le mouvement de la came 2 et comportent à leur extrémité un suiveur de came 9 susceptible de glisser dans le chemin de came 4. Le suiveur de came 9 est placé hors du chemin de came 4 préalablement à son montage, comme le montre le levier 8 illustré dans la partie gauche de la figure 3.

En référence à la figure 2, chaque levier 8 comporte un bras flexible 10, un axe de rotation libre 11 et un élément de support 12 pour limiter la position du suiveur de came 9 lorsque ce dernier est poussé dans le sens opposé de rotation.

Le dispositif à came 1 comporte en outre une butée 13 destinée à limiter le mouvement de rotation maximal du levier 8 lorsque le suiveur 9 se trouve en dehors du chemin de came 4 préalablement à son montage et qu'il est poussé par un des segments en position extrême 7 à une extrémité distale. Ladite butée 13 fait partie de la carcasse sur laquelle tournent la came 2 et les leviers 8. Si les figures illustrent une butée sous forme schématique, celle-ci peut toutefois adopter une autre configuration physique adaptée.

Par ailleurs, la paroi extérieure 5 du chemin de came 4 comprend dans chaque segment en position extrême 7 une ouverture 14 conçue pour recevoir et engager le suiveur 9 dans le chemin de came 4 de manière automatique, chaque ouverture 14 étant associée à un levier 8, comme on l'expliquera plus en détail par la suite.

La figure 3 illustre un levier 8 dont le suiveur 9 est déjà engagé dans le chemin de came 4 alors que le suiveur 9 de l'autre levier 8, illustré du côté gauche de la figure, se trouve en dehors du chemin de came 4. À mesure que la came 2 tourne, suivant la flèche illustrée, le levier 8 glisse sur la paroi extérieure 5.

On peut constater à la figure 4 que lorsque le suiveur de came 9 est proche d'une extrémité distale, la paroi extérieure 5 du segment en position extrême 7 pousse le levier 8 en le faisant tourner vers l'extérieur. Le levier 8 entre toutefois au contact de la butée 13 qui limite ce mouvement de rotation en forçant le suiveur 9 à entrer au contact de la paroi extérieure 5. À ce moment, le suiveur de came 9 se trouve à proximité de l'ouverture 14 du chemin de came 4.

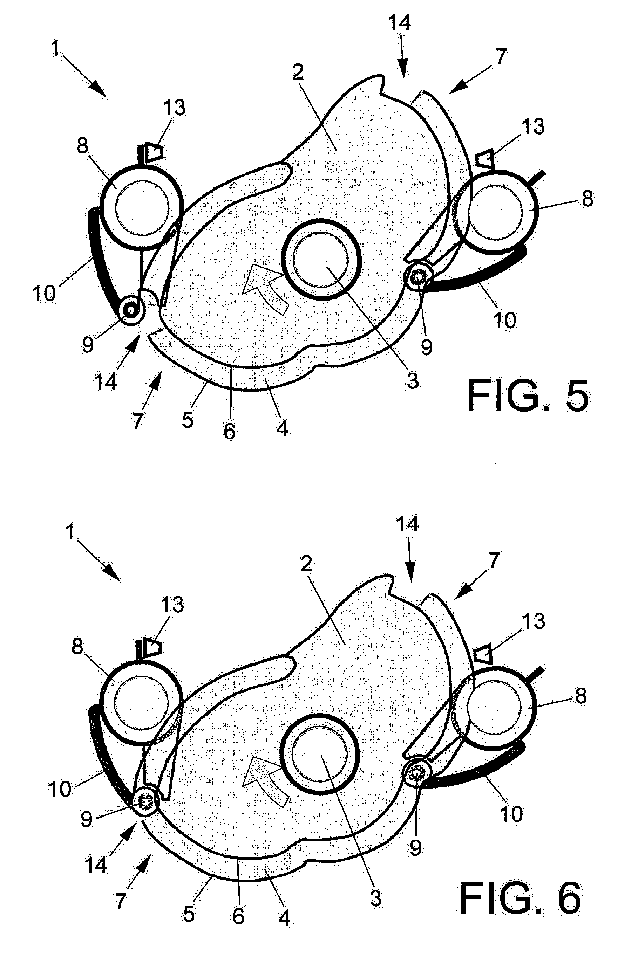

Dès lors, comme on peut le constater à la figure 5, le levier 8 restant bloqué, le suiveur de came 9 poussé par la paroi extérieure 5 continue de se déplacer du fait de l'élasticité du bras flexible 10 en permettant toutefois à la came 2 de continuer de tourner.

Finalement, le suiveur de came 9 atteint l'extrémité ouverte de la paroi extérieure 5, comme on peut le constater à la figure 6, et pénètre automatiquement dans l'ouverture 14 sous l'effet de la force de rappel du bras flexible 10, lequel reprend sa position normale et pousse le suiveur 9 contre la paroi interne 6 du chemin de came 4, en le laissant ainsi engagé.

Lorsque la came 2 tourne dans le sens opposé, le suiveur 9 reste dans le chemin de came 4 sans risquer d'en sortir à aucun moment par l'ouverture 14 grâce à l'action du bras flexible 10, en garantissant ainsi le bon fonctionnement du dispositif à came 1.

Le montage automatique des deux leviers 8 s'effectue donc d'une manière rapide et efficace grâce au mouvement de va-et-vient de la came 2, avec l'accouplement initial d'un levier 8 suivi de l'accouplement du deuxième levier 8 lorsque la came 2 change de sens de rotation. Dès lors, les deux leviers 8 restent correctement en place dans le chemin de came 4. La figure 1 montre les suiveurs de came 9 des deux leviers 8 accouplés correctement dans le chemin de came 4, au niveau d'un segment central éloigné des ouvertures 14.

Il convient de souligner que la flexibilité requise pour obliger le suiveur 9 à rentrer dans le chemin de came 4 pourrait aussi être obtenue d'autres façons, notamment en conférant une certaine élasticité à la butée 13.

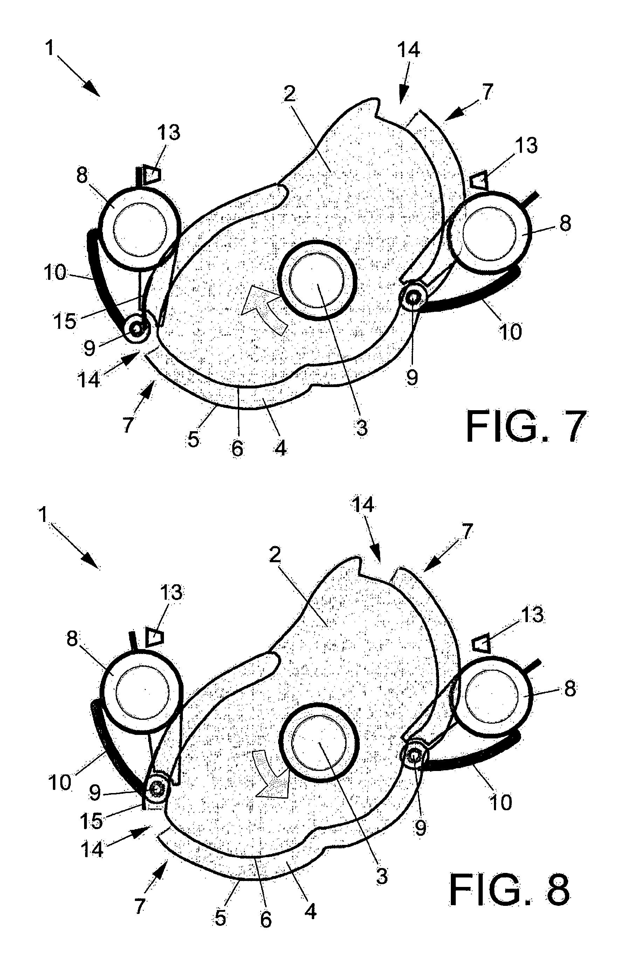

Selon un autre mode de réalisation de l'invention illustré aux figures 7 et 8, le dispositif à came 1 est du type décrit dans le premier mode de réalisation à la différence près que la paroi extérieure 5 du chemin de came 4 est constituée d'un matériau flexible, tout au moins au niveau du segment 15 adjacent à chaque ouverture 14. Dans ce cas, la paroi extérieure 5 fléchit lorsque le suiveur de came 9, qui glisse sur le segment en position extrême 7 à l'extrémité distale, applique une force de compression sur ladite paroi extérieure 5 (voir figure 7).

Une fois le suiveur de came 9 engagé dans le chemin de came 4 par l'ouverture 14, le segment fléchi 15 de la paroi extérieure 5 reprend sa forme initiale, et le suiveur de came 9 reste introduit dans le chemin de came 4. On se rend bien compte à la figure 8 que le suiveur de came 9 poursuit sa course dans le chemin de came 4 sans ressortir lorsque la came 2 a changé de sens de rotation.

Cette solution à paroi extérieure flexible 15 peut être utilisée avec un bras de levier sensiblement rigide, ou être combinée au levier à bras flexible 10 décrit précédemment, comme l'illustrent ces figures 7 et 8. Dans ce dernier cas, le bras flexible 10 peut être plus robuste du fait qu'il nécessite une moindre déformation, le couple requis pour faire tourner la came 2 s'en trouvant par ailleurs réduit.

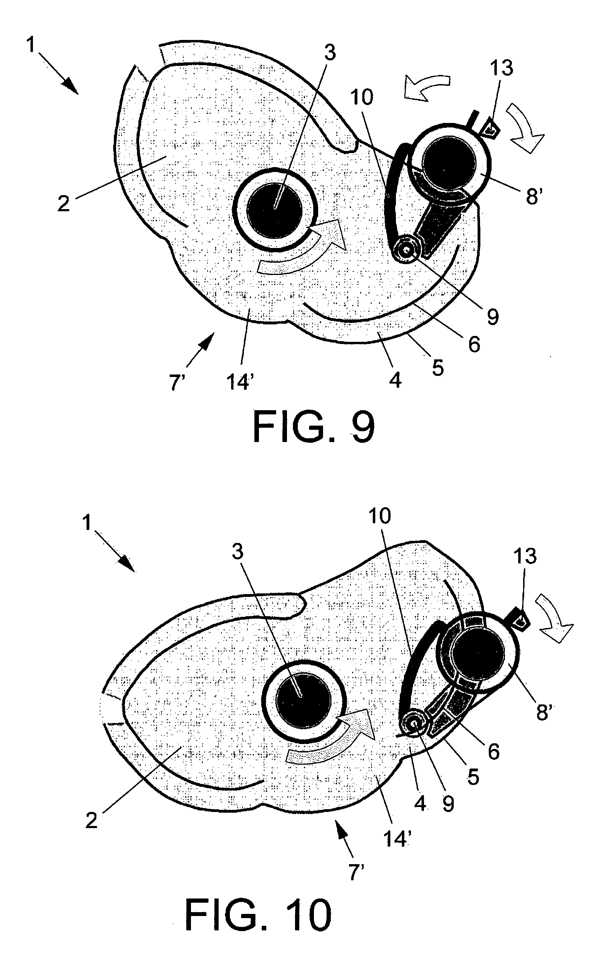

Selon un autre mode de réalisation de l'invention illustré aux figures 9 à 12, le dispositif à came 1 se différencie du premier mode de réalisation en ce qu'il comporte au moins un segment en position extrême 7' situé à une extrémité proximale par rapport à l'axe de rotation 3 de la came 2, au moins un levier 8' placé dans la partie intérieure par rapport au chemin de came 4 et au moins une ouverture 14' pratiquée dans la paroi intérieure 6 du chemin de came 4 de l'extrémité proximale et associée au levier 8'. Le fonctionnement est analogue à celui décrit dans le premier mode de réalisation.

On constate à la figure 9 que le suiveur de came 9 est situé à proximité de la paroi intérieure 6 du chemin de came 4 préalablement à son montage.

On constate à la figure 10 que lorsque le suiveur de came 9 est proche d'une extrémité proximale, la paroi intérieure 6 du segment en position extrême 7' à ladite extrémité proximale pousse le levier 8' en le faisant tourner vers l'intérieur. Le levier 8' entre toutefois au contact de la butée 13 qui limite ce mouvement de rotation en forçant le suiveur 9 à entrer au contact de la paroi intérieure 6. À ce moment, le suiveur de came 9 se trouve à proximité de l'ouverture 14' du chemin de came 4.

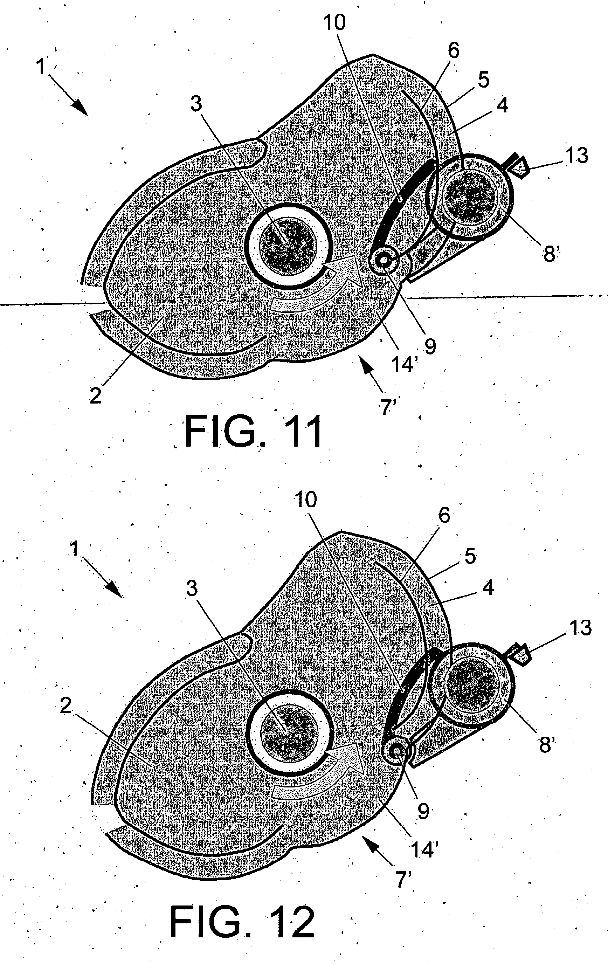

Dès lors, comme on peut le constater à la figure 11, le levier 8' restant bloqué, le suiveur de came 9 poussé par la paroi intérieure 6 continue de se déplacer du fait de l'élasticité du bras flexible 10 en permettant toutefois à la came 2 de continuer de tourner.

Finalement, le suiveur de came 9 atteint l'extrémité ouverte de la paroi intérieure 6, comme on peut le constater à la figure 12, et pénètre automatiquement dans l'ouverture 14' sous l'effet de la force de rappel du bras flexible 10, lequel reprend sa position normale et pousse le suiveur 9 contre la paroi externe 5 du chemin de came 4, en le laissant ainsi engagé.

Dans les exemples décrits, on a représenté une came plane avec les axes respectifs des leviers et de la came parallèles. L'invention convient toutefois à un type quelconque de came et de leviers, notamment les cames cylindriques, les cames linéaires, les cames coniques, etc. Par ailleurs, l'axe de la came et l'axe du levier peuvent occuper des positions non parallèles entre elles.

## Revendications

1. Dispositif à came (1), notamment pour un appareil de chauffage, ventilation et/ou climatisation de véhicules automobiles, comprenant une came (2) pourvue d'un axe de rotation (3) apte à effectuer un mouvement rotatif de va-et-vient, ladite came (2) comportant un chemin de came (4) périmétrique défini entre une paroi extérieure (5) et une paroi intérieure (6), au moins un levier (8,8') rotatif entraîné par le mouvement de la came (2) dont l'extrémité comporte un suiveur de came (9) susceptible de glisser dans le chemin de came (4),
**caractérisé en ce qu'**il comprend au moins un élément déformable (8,8',15) susceptible de fléchir lorsque le suiveur de came (9), situé hors du chemin de came (4) préalablement à son montage, est poussé par un segment en position extrême (7,7') du chemin de came (4) au cours de la rotation de la came (2), alors que la rotation libre du levier (8,8') est bloquée par une butée fixe (13), et **en ce que** le chemin de came (4) comporte dans ledit segment en position extrême (7,7') une ouverture (14,14') conçue pour recevoir et engager le suiveur de came (9) dans le chemin de came (4) de manière automatique grâce à la force de rappel de l'élément déformable (8,8',15).

2. Dispositif (1) selon la revendication 1, dans lequel l'élément déformable est un bras flexible (10) appartenant au levier (8,8').

3. Dispositif (1) selon la revendication 1, dans lequel l'élément déformable est un segment de paroi flexible (15) appartenant à une paroi (5,6) du chemin de came (4), occupant une position adjacente à l'ouverture (14,14').

4. Dispositif (1) selon la revendication 2 ou 3, comportant deux segments en position extrême (7) respectivement situés à chacune des extrémités distales par rapport à l'axe de rotation (3) de la came (2), deux leviers (8) placés dans la partie extérieure par rapport au chemin de came (4), et deux ouvertures (14) pratiquées dans la paroi extérieure (5) du chemin de came (4) de chaque extrémité distale et associées chacune à un levier (8).

5. Dispositif (1) selon la revendication 2 ou 3, comportant au moins un segment en position extrême (7') situé à une extrémité proximale par rapport à l'axe de rotation (3) de la came (2), au moins un levier (8') placé dans la partie intérieure par rapport au chemin de came (4), et au moins une ouverture (14') pratiquée dans la paroi intérieure (6) du chemin de came (4) de l'extrémité proximale et associée au levier (8').

6. Dispositif (1) selon la revendication 2, dans lequel le levier (8,8') comporte un élément de support (12) destiné à limiter la position du suiveur de came (9) dans la position de repos du bras flexible (10).

7. Dispositif (1) selon la revendication 1, dans lequel l'ouverture (14,14') constitue une interruption de la paroi (5,6) du segment en position extrême (7,7') du chemin de came (4).

8. Dispositif (1) selon la revendication 1, dans lequel la came (2) présente une configuration sensiblement ovale, l'axe de rotation (3) occupant une position sensiblement centrale.

9. Dispositif (1) selon la revendication 1, dans lequel la butée (13) dudit au moins un levier (8,8') est solidaire d'une carcasse sur laquelle tournent la came (2) et ledit au moins un levier (8,8').

10. Procédé de montage d'au moins un suiveur de came (9) dans le chemin de came (4) du dispositif à came (1) selon l'une quelconque des revendications précédentes,
**caractérisé en ce que** le suiveur de came (9) est placé hors du chemin de came (4) préalablement à son montage, ledit au moins un élément déformable (8,8',15) fléchit lorsque le suiveur de came (9) est poussé par un segment en position extrême (7,7') du chemin de came (4) au cours de la rotation de la came (2), alors que la rotation libre du levier (8,8') est bloquée par une butée fixe (13), ledit suiveur de came (9) pénétrant de manière automatique dans une ouverture (14,14') du chemin de came (4) située dans ledit segment en position extrême (7,7') grâce à la force de rappel de l'élément déformable (8,8',15).

11. Procédé selon la revendication 10, dans lequel, suite au montage d'un premier suiveur de came (9), la came (2) est actionnée en sens inverse de rotation pour monter un deuxième suiveur de came (9) placé hors du chemin de came (4) et dans une position sensiblement opposée au premier suiveur de came (9).

## Patentansprüche

1. Nockenvorrichtung (1), insbesondere für ein Heiz-, Lüftungsgerät und/oder eine Klimaanlage für Kraftfahrzeuge, die einen Nocken (2) aufweist, der mit einer Rotationsachse (3) versehen ist, die geeignet ist, um eine abwechselnde Rotationsbewegung auszuführen, wobei der Nocken (2) eine umfängliche Kurvenbahn (4) umfasst, die zwischen einer Außenwand (5) und einer Innenwand (6) definiert ist, mindestens einen Drehhebel (8, 8'), der von der Bewegung des Nockens (2) angetrieben wird, dessen Ende einen Nockenstößel (9) umfasst, der in der Kurvenbahn (4) gleiten kann,
**dadurch gekennzeichnet, dass** sie mindestens ein verformbares Element (8, 8', 15) umfasst, das sich biegen kann, wenn der Nockenstößel (9), der außerhalb der Kurvenbahn (4) vor ihrer Montage liegt, von einem Segment in Endlage (7, 7') der Kurvenbahn (4) im Laufe der Drehung des Nockens (2) geschoben wird, während die freie Drehung des Hebels (8, 8') durch einen stationären Anschlag (13) blockiert ist, und dass die Kurvenbahn (4) in dem Segment in Endlage (7, 7') eine Öffnung (14, 14') umfasst, die ausgelegt ist, um den Nockenstößel (9) in der Kurvenbahn (4) automatisch auf Grund der Rückholkraft des verformbaren Elements (8, 8', 15) aufzunehmen und darin einzugreifen.

2. Vorrichtung (1) nach Anspruch 1, bei der das verformbare Element ein elastischer Arm (10), der zu dem Hebel (8, 8') gehört, ist.

3. Vorrichtung (1) nach Anspruch 1, bei der das verformbare Element ein elastisches Wandsegment (15) ist, das zu einer Wand (5, 6) der Kurvenbahn (4) gehört, die eine Position benachbart zur Öffnung (14, 14') belegt.

4. Vorrichtung (1) nach Anspruch 2 oder 3, die zwei Segmente in Endlage (7) umfasst, die sich jeweils an jedem der distalen Enden in Bezug auf die Rotationsachse (3) des Nockens (2) befinden, zwei Hebel (8), die in dem äußeren Teil in Bezug auf die Kurvenbahn (4) platziert sind, und zwei Öffnungen (14), die in der Außenwand (5) der Kurvenbahn (4) jedes distalen Endes angelegt und jeweils mit einem Hebel (8) verbunden sind.

5. Vorrichtung (1) nach Anspruch 2 oder 3, die mindestens ein Segment in Endlage (7') umfasst, das sich an einem proximalen Ende in Bezug auf die Rotationsachse (3) des Nockens (2) befindet, mindestens einen Hebel (8'), der in dem inneren Teil in Bezug auf die Kurvenbahn (4) platziert ist, und mindestens eine Öffnung (14'), die in der Innenwand (6) der Kurvenbahn (4) des proximalen Endes angelegt und mit dem Hebel (8') verbunden ist.

6. Vorrichtung (1) nach Anspruch 2, bei der der Hebel (8, 8') ein Stützelement (12) aufweist, das dazu bestimmt ist, die Position des Nockenstößels (9) in der Ruheposition des elastischen Arms (10) zu begrenzen.

7. Vorrichtung (1) nach Anspruch 1, bei der die Öffnung (14, 14') eine Unterbrechung der Wand (5, 6) des Segments in Endposition (7, 7') der Kurvenbahn (4) bildet.

8. Vorrichtung (1) nach Anspruch 1, bei der der Nocken (2) eine im Wesentlichen ovale Auslegung aufweist, wobei die Rotationsachse (3) eine im Wesentlichen zentrale Position belegt.

9. Vorrichtung (1) nach Anspruch 1, bei der der Anschlag (13) des mindestens einen Hebels (8, 8') fest mit einem Gestell verbunden ist, auf dem der Nocken (2) und der mindestens eine Hebel (8, 8') drehen.

10. Montageverfahren mindestens eines Nockenstößels (9) in der Kurvenbahn (4) der Nockenvorrichtung (1) nach einem der vorhergehenden Ansprüche,
**dadurch gekennzeichnet, dass** der Nockenstößel (9) außerhalb der Kurvenbahn (4) vor ihrer Montage liegt, wobei sich das mindestens eine verformbare Element (8, 8', 15) biegt, wenn der Nockenstößel (9) von einem Segment in Endlage (7, 7') der Kurvenbahn (4) im Laufe der Drehung des Nockens (2) geschoben wird, während die freie Drehung des Hebels (8, 8') durch einen stationären Anschlag (13) blockiert ist, wobei der Nockenstößel (9) automatisch in eine Öffnung (14, 14') der Kurvenbahn (4), die sich in dem Segment in Endlage (7, 7') befindet, auf Grund der Rückholkraft des elastischen Elements (8, 8', 15) eindringt.

11. Verfahren nach Anspruch 10, bei dem im Anschluss an die Montage eines ersten Nockenstößels (9) der Nocken (2) in umgekehrter Rotationsrichtung betätigt wird, um einen zweiten Nockenstößel (9), der außerhalb der Kurvenbahn (4) platziert ist, und in einer im Wesentlichen zu dem ersten Nockenstößel (9) entgegengesetzten Position zu montieren.

## Claims

1. Cam device (1), notably for a motor vehicle heating, ventilation and/or air-conditioning system, comprising a cam (2) provided with a pivot axis (3) able to perform a back-and-forth rotary movement, the said cam (2) comprising a camway (4) on its perimeter which camway is defined between an outer wall (5) and an inner wall (6), at least one rotary lever (8, 8') driven by the movement of the cam (2) and the end of which comprises a cam follower (9) able to slide along the camway (4),
**characterized in that** it comprises at least one deformable element (8, 8', 15) able to flex when the cam follower (9), situated off the camway (4) prior to its mounting, is pushed by a segment of the camway (4) in an extreme position (7, 7') as the cam (2) rotates, with free rotation of the lever (8, 8') being blocked by a fixed stop (13), and **in that** the camway (4) in the said segment in the extreme position (7, 7') comprises an opening (14, 14') designed to accept the cam follower (9) and engage it on the camway (4) automatically thanks to the return force of the deformable element (8, 8', 15).

2. Device (1) according to Claim 1, in which the deformable element is a flexible arm (10) belonging to the lever (8, 8').

3. Device (1) according to Claim 1, in which the deformable element is a flexible wall segment (15) belonging to a wall (5, 6) of the camway (4), occupying a position adjacent to the opening (14, 14').

4. Device (1) according to Claim 2 or 3, comprising two segments in extreme positions (7) situated respectively at each of the distal ends as measured in relation to the pivot axis (3) of the cam (2), two levers (8) placed in the outer part with respect to the camway (4), and two openings (14) made in the outer wall (5) of the camway (4) of each distal end and each one associated with a lever (8).

5. Device (1) according to Claim 2 or 3, comprising at least one segment in an extreme position (7') situated at a proximal end as measured in relation to the pivot axis (3) of the cam (2), at least one lever (8') placed in the inner part with respect to the camway (4), and at least one opening (14') made in the inner wall (6) of the camway (4) of the proximal end and associated with the lever (8').

6. Device (1) according to Claim 2, in which the lever (8, 8') comprises a support element (12) intended to limit the position of the cam follower (9) when the flexible arm (10) is in the rest position.

7. Device (1) according to Claim 1, in which the opening (14, 14') constitutes a break in the wall (5, 6) in the segment in the extreme position (7, 7') of the camway (4).

8. Device (1) according to Claim 1, in which the cam (2) has a substantially oval shape, the pivot axis (3) occupying a substantially central position.

9. Device (1) according to Claim 1, in which the stop (13) for the said at least one lever (8, 8') is secured to a shell on which the cam (2) and the said at least one lever (8, 8') rotate.

10. Method for mounting at least one cam follower (9) in the camway (4) of the cam device (1) according to any one of the preceding claims,
**characterized in that** the cam follower (9) is placed off the camway (4) prior to its mounting, the said at least one deformable element (8, 8', 15) flexes when the cam follower (9) is pushed by a segment of the camway (4) in an extreme position (7, 7') as the cam (2) rotates, with free rotation of the lever (8, 8') being blocked by a fixed stop (13), the said cam follower (9) automatically entering an opening (14, 14') in the camway (4), which opening is situated in the said segment in the extreme position (7, 7') by virtue of the return force of the deformable element (8, 8', 15).

11. Method according to Claim 10, in which, following the mounting of a first cam follower (9), the cam (2) is made to operate in the opposite direction of rotation so that a second cam follower (9) positioned off the camway (4) and in a position substantially opposite to the first cam follower (9) can be mounted.
